# EUROPEAN PATENT SPECIFICATION

(11) **EP 3 133 623 B1**
(45) Date of publication and mention of the grant of the patent: **21.11.2018**
(21) Application number: 14889457.9
(22) Date of filing: 16.04.2014
(51) Int. Cl.: H01M 10/0569, H01M 10/0567, H01M 10/052, H01G 11/60, H01G 9/035

(54) **SOLVENT FOR ELECTROLYTIC SOLUTION FOR USE IN ELECTROCHEMICAL DEVICES**
LÖSUNGSMITTEL FÜR ELEKTROLYTISCHE LÖSUNG ZUR VERWENDUNG IN ELEKTROCHEMISCHEN VORRICHTUNGEN
SOLVANT POUR SOLUTION ÉLECTROLYTIQUE DESTINÉE À ÊTRE UTILISÉE DANS DES DISPOSITIFS ÉLECTROCHIMIQUES

(43) Date of publication of application: 22.02.2017
(73) Proprietor: Sumitomo Seika Chemicals Co., Ltd., Kako-gun, Hyogo 675-0145 (JP)
(72) Inventor: MURAKAMI Shinya, Kako-gun Hyogo 675-0145 (JP); OYAMA Shunji, Kako-gun Hyogo 675-0145 (JP); HIYAMA Takehiro, Kako-gun Hyogo 675-0145 (JP)
(74) Representative: Webster, Jeremy Mark
(86) International application number: PCT/JP2014/060826
(87) International publication number: WO 2015/159386

(56) References cited:
- WO-A1-2013/128824
- JP-A- H08 241 732
- JP-A- 2008 034 233
- JP-A- 2008 171 902
- JP-A- 2009 215 369
- JP-A- 2011 023 330
- JP-A- 2011 154 987
- JP-A- 2012 176 935
- JP-A- 2014 007 052
- US-A1- 2014 012 018

## Description

### TECHNICAL FIELD

The present invention relates to a solvent for an electrolytic solution of electrochemical devices intended to be used in electrochemical devices such as capacitors.

### BACKGROUND ART

Electrochemical devices, such as secondary batteries and aluminum electrolytic capacitors, which can provide a high energy density, are now receiving attention as devices to be used in, for example, power sources for electronic devices, power sources for power storage, and power sources for automobiles which have recently been made higher in performance and smaller in size.

Common examples of a solvent for an electrolytic solution intended to be used in these electrochemical devices include cyclic carbonates and chain carbonates such as propylene carbonate, ethylene carbonate, and diethyl carbonate; γ-butyrolactone; and derivatives having one of these as a basic skeleton. For example, Patent Literature 1 and 2 each disclose an electrolytic capacitor in which γ-butyrolactone is used.

In order to reduce the amount used of environmentally hazardous substances, lead-free electronic components are now produced. Here, lead-free reflowing needs to be performed at a higher temperature than conventional cases. However, in devices in which a conventional solvent for an electrolytic solution as disclosed in Patent Literature 1 or Patent Literature 2 is used, gas is likely to generate from the solvent for an electrolytic solution due to heat of a reflow furnace, which expands the devices.

Such an expanded device may not be mounted as designed on an apparatus or lose its reliability.

A sulfone compound such as sulfolane is electrically and chemically stable. For example, Patent Literature 3 discloses an electric double layer capacitor in which propylene carbonate and sulfolane are used. A solvent for an electrolytic solution containing a sulfone compound, however, is pyrolyzed at high temperatures to generate sulfur dioxide. As a method for reducing the amount of sulfur dioxide generated by pyrolysis of a sulfone compound, Patent Literature 4 discloses a method of adding an organic sulfur compound and Patent Literature 5 discloses a method of adding a weakly basic organic compound, a nitroxy radical antioxidant, a hindered phenolic antioxidant, a basic inorganic substance, or a hindered amine antioxidant. The solvent for an electrolytic solution produced by the method disclosed in Patent Literature 4 or Patent Literature 5, however, contains a large amount of additives, which may lower the solubility of an electrolyte in the electrolytic solution or cause a side reaction in the electrolytic solution. As a method for reducing the amount of sulfur dioxide without using a large amount of additives, Patent Literature 6 discloses a method of adding a small amount of an organic amine to a sulfolane derivative. WO 2013/128824 A1 concerns an electrolyte solution for electric double layer capacitors containing an organic solvent and a quaternary ammonium salt that is dissolved in the organic solvent. JP 2008-171902 A concerns an electrolyte for an electric double-layer capacitor made by dissolving quaternary ammonium tetrafluoroborate in a mixed solvent of sulfolane and chain sulfone. JP H08-241732 A concerns an organic electrolyte secondary battery having a negative electrode consisting of a carbon material capable of storing and releasing lithium, a positive electrode and an organic electrolyte consisting of a solvent and a solute, characterized in that the solvent comprises dioxide thiophene and an acyclic sulfone. JP 2012-176935 A concerns a process for producing quaternary ammonium salt, wherein after the quaternization of tertiary amines, the solution of the quaternary ammonium salt is neutralized with an inorganic acid aqueous solution or with an organic acid aqueous solution, thereby, the obtained aqueous solution of the quaternary ammonium salt is condensed so as to reduce the water content to 10-60%, a solvent is added thereto in the next step, and purification is performed with recrystallization. JP 2014-007052 A concerns a nonaqueous electrolyte comprising: a compound represented by general formula (1):
(XSO) (X'SO) NLi (where, X, X' represents a fluorine atom, a 1-6C alkyl group, or a 1-6C fluoroalkyl group, and at least one of X and X' is a fluorine atom.); a solvent; and an amine-based compound, while the content of the amine-based compound is 0.1 ppm or more and 1,000 ppm or less. JP 2008-034233 A concerns a lithium-ion secondary battery consisting of an electrolytic solution, a positive electrode, a negative electrode and a separator, wherein a polymerization inhibitor is added at a concentration of 100 ppm to 5% relative to an additive that is mixed in the electrolytic solution.

### CITATION LIST

### - Patent Literature

Patent Literature 1: JP 2007-059611 A
Patent Literature 2: JP 2006-237307 A
Patent Literature 3: JP S63-12122 A
Patent Literature 4: JP H11-255765 A
Patent Literature 5: JP 2009-215369 A
Patent Literature 6: WO 2012/098811

### SUMMARY OF INVENTION

### - Technical Problem

The solvent produced by the method disclosed in Patent Literature 6 can reduce the amount of sulfur dioxide at high temperatures for a short period of time but cannot sufficiently reduce the amount of sulfur dioxide over a long period of time. In addition, the solvent may be solidified or become highly viscous at low temperatures. Accordingly, the solvent produced by such a method cannot be suitably used as a solvent for an electrolytic solution intended to be used in electrochemical devices.

The present invention aims to provide a solvent for an electrolytic solution of electrochemical devices which is chemically stable at high temperatures over a long period of time and is stably liquid at low temperatures.

### - Solution to problem

The present invention relates to a solvent for an electrolytic solution of electrochemical devices, including: a cyclic sulfone compound represented by the formula (1): 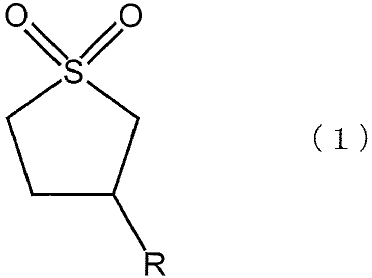 wherein R is a hydrogen atom or a linear or branched C1-C6 alkyl group; a chain alkyl sulfone compound represented by the formula (2) : 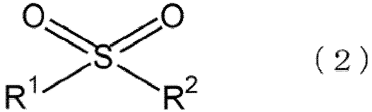 wherein R¹ and R² each independently represent a linear or branched C1-C5 alkyl group, and may be the same as or different from each other; and 4-tert-butylcatechol, wherein the amount of the 4-tert-butylcatechol is 0.0001 to 0.4 parts by mass based on 100 parts by mass of the total amount of the cyclic sulfone compound and the chain alkyl sulfone compound.

The present invention is specifically described in the following.

The present inventors investigated the reason why the solvent for an electrolytic solution produced by the method disclosed in Patent Literature 6 cannot reduce the amount of sulfur dioxide over a long period of time, and reached the conclusion that the above problem is caused by the method in which generated sulfur dioxide is neutralized but decomposition of the sulfone compound, which generates sulfur dioxide, is not inhibited. The present inventors also realized that use of a sulfolane derivative alone as a sulfone compound causes solidification or an increase in the viscosity at low temperatures.

As a result of intensive studies, the present inventors found out that, in a case where a solvent for an electrolytic solution of electrochemical devices contains a predetermined cyclic sulfone compound and a predetermined chain alkyl sulfone compound as sulfone compounds and 4-tert-butylcatechol, the solvent is chemically stable over a long period of time at high temperatures and is stably liquid at low temperatures. The present invention was thus completed.

The solvent for an electrolytic solution of electrochemical devices of the present invention contains a cyclic sulfone compound represented by the formula (1) (hereafter, also simply referred to as "cyclic sulfone compound"). The cyclic sulfone compound is electrically stable and can be suitably used for a solvent for an electrolytic solution.

In the formula (1), R is a hydrogen atom or a linear or branched C1-C6 alkyl group. If R is an alkyl group having a carbon number of 7 or larger, the resulting electrolytic solution for electrochemical devices has a significantly high viscosity and poor electroconductivity.

Examples of the cyclic sulfone compound include sulfolane, 3-methyl sulfolane, 3-ethyl sulfolane, 3-propyl sulfolane, 3-butyl sulfolane, 3-pentyl sulfolane, 3-isopropyl sulfolane, 3-isobutyl sulfolane, and 3-isopentyl sulfolane. Preferred among these is sulfolane because of its low viscosity and excellent electrical stability. These cyclic sulfone compounds may be used alone, or in combination of two or more.

The solvent for an electrolytic solution of electrochemical devices of the present invention contains a chain alkyl sulfone compound represented by the formula (2) (hereafter, also simply referred to as "chain alkyl sulfone compound"). Containing the chain alkyl sulfone compound, the solvent for an electrolytic solution of electrochemical devices of the present invention is stably liquid even at low temperatures.

In the formula (2), R¹ and R² each independently represent a linear or branched C1-C5 alkyl group and may be the same as or different from each other. Preferably, R¹ and R² are different from each other because the melting point can be lowered. Moreover, the difference in the carbon number between R¹ and R² is more preferably 1 to 3, still more preferably 1 or 2.

If the carbon number of R¹ and/or R² is 6 or larger, the resulting electrolytic solution of electrochemical devices has a significantly high viscosity and poor electroconductivity. The carbon number of each of R¹ and R² is preferably 3 or smaller.

For a lower melting point, R¹ and R² each preferably are a branched alkyl group.

Examples of the chain alkyl sulfone compound include dimethyl sulfone, diethyl sulfone, dipropyl sulfone, dibutyl sulfone, dipentyl sulfone, ethyl methyl sulfone, ethyl propyl sulfone, ethyl isopropyl sulfone, ethyl butyl sulfone, ethyl isobutyl sulfone, isopropyl sec-butyl sulfone, ethyl pentyl sulfone, ethyl isopentyl sulfone, butyl pentyl sulfone, and isobutyl isopentyl sulfone. Preferred among these are ethyl isopropyl sulfone and ethyl methyl sulfone. These chain alkyl sulfone compounds may be used alone, or in combination of two or more.

The lower limit of the amount of the chain alkyl sulfone compound is preferably 10 parts by mass based on 100 parts by mass of the total amount of the cyclic sulfone compound and the chain alkyl sulfone compound, and the upper limit thereof is preferably 40 parts by mass. When the amount of the chain alkyl sulfone compound is less than 10 parts by mass, the resulting electrolytic solution of electrochemical devices may be solidified or have a higher viscosity at low temperatures and have poor electroconductivity at low temperatures. When the amount of the chain alkyl sulfone compound is more than 40 parts by mass, the resulting electrolytic solution of electrochemical devices may have poor electric stability or chemical stability. The upper limit of the amount of the chain alkyl sulfone compound is more preferably 30 parts by mass.

The chain alkyl sulfone compound preferably has a boiling point of 240°C or higher for imparting an electrochemical device with high heat resistance and high durability.

The chain alkyl sulfone compound preferably has a melting point of 0°C or lower for ensuring stable operation of an electrochemical device at low temperatures.

The chain alkyl sulfone compound preferably has an exothermic onset temperature of 200°C or higher for ensuring the heat stability of an electrochemical device.

The solvent for an electrolytic solution of electrochemical devices of the present invention contains 4-tert-butylcatechol. The solvent for an electrolytic solution of electrochemical devices of the present invention may contain an organic amine compound. The organic amine compound and 4-tert-butylcatechol inhibit decomposition of the cyclic sulfone compound and the chain alkyl sulfone compound.

Examples of the organic amine compound include: primary amine compounds such as methylamine, ethylamine, propylamine, butylamine, pentylamine, hexylamine, heptylamine, octylamine, nonylamine, monoethanolamine, monoisopropanolamine, and benzylamine; secondary amine compounds such as dimethylamine, diethylamine, dipropylamine, dibutylamine, dipentyl amine, dihexylamine, diheptylamine, dioctylamine, dinonylamine, diethanolamine, and diisopropanolamine; and tertiary amine compounds such as trimethylamine, triethylamine, tripropylamine, tributylamine, tripentylamine, trihexylamine, triheptylamine, trioctylamine, trinonylamine, triethanolamine, and triisopropanolamine.

From the standpoint of the price and availability, preferred are primary amine compounds and secondary amine compounds, more preferred are at least one selected from the group consisting of butylamine, octylamine, monoethanolamine, monoisopropanolamine, benzylamine, dimethylamine, diethylamine, dioctylamine, and diethanolamine, and still more preferred is monoethanolamine. These organic amine compounds may be used alone, or in combination of two or more.

The lower limit of the amount of 4-tert-butylcatechol is 0.0001 parts by mass based on 100 parts by mass of the total amount of the cyclic sulfone compound and the chain alkyl sulfone compound, and the upper limit thereof is 0.4 parts by mass. When the amount of 4-tert-butylcatechol is less than 0.0001 parts by mass, the effect of inhibiting decomposition of the cyclic sulfone compound and the chain alkyl sulfone compound may not be sufficiently exerted. When the amount of 4-tert-butylcatechol is more than 0.4 parts by mass, a side reaction may occur in the resulting electrolytic solution of electrochemical devices. The upper limit of the amount of 4-tert-butylcatechol is more preferably 0.2 parts by mass.

The solvent for an electrolytic solution of electrochemical devices of the present invention preferably consists of the cyclic sulfone compound, the chain alkyl sulfone compound and 4-tert-butylcatechol but may contain other organic solvents to the extent that the aim of the present invention is not hampered. Examples of the other organic solvents include ethylene carbonate, propylene carbonate, butylene carbonate, dimethyl carbonate, γ-butyrolactone, 1,3-dioxolan, acetonitrile, propionitrile, butyronitrile, dimethylformamide, 1,2-dimethoxyethane, tetrahydrofuran, and 2-methyltetrahydrofuran.

The solvent for an electrolytic solution of electrochemical devices of the present invention preferably has a viscosity measured with a rotary viscometer at 25°C and 100 rpm of 11 mPa·s or lower. When the solvent for an electrolytic solution of electrochemical devices has a viscosity of higher than 11 mPa·s, the resulting electrochemical device may have poor electrical characteristics.

The solvent for an electrolytic solution of electrochemical devices of the present invention is suitably used, for example, for secondary batteries, aluminum electrolytic capacitors, and electric double layer capacitors which are intended to be used in power sources for electronic devices, power sources for power storage, and power sources for automobiles.

### - Advantageous Effects of Invention

The present invention can provide a solvent for an electrolytic solution of electrochemical devices which is chemically stable at high temperatures over a long period of time and is stably liquid at low temperatures.

### DESCRIPTION OF EMBODIMENTS

The present invention is specifically described in the following with reference to, but not limited to, examples.

### (Reference Example 1)

An amount of 80 parts by mass of sulfolane as a cyclic sulfone compound, 20 parts by mass of ethyl methyl sulfone as a chain alkyl sulfone compound, and 0.1 parts by mass of monoethanolamine were mixed to prepare a solvent for an electrolytic solution of electrochemical devices.

### (Reference Example 2)

A solvent for an electrolytic solution of electrochemical devices was prepared in the same manner as in Reference Example 1, except that 20 parts by mass of ethyl isopropyl sulfone was used, instead of ethyl methyl sulfone, as a chain alkyl sulfone compound.

### (Example 3)

A solvent for an electrolytic solution of electrochemical devices was prepared in the same manner as in Reference Example 1, except that 0.1 parts by mass of 4-tert-butylcatechol was used instead of monoethanolamine.

### (Example 4)

A solvent for an electrolytic solution of electrochemical devices was prepared in the same manner as in Reference Example 1, except that 20 parts by mass of ethyl isopropyl sulfone was used, instead of ethyl methyl sulfone, as a chain alkyl sulfone compound and 0.1 parts by mass of 4-tert-butylcatechol was used instead of monoethanolamine.

### (Reference Example 5)

A solvent for an electrolytic solution of electrochemical devices was prepared in the same manner as in Reference Example 1, except that the amount of sulfolane was changed to 90 parts by mass and the amount of ethyl methyl sulfone was changed to 10 parts by mass.

### (Reference Example 6)

A solvent for an electrolytic solution of electrochemical devices was prepared in the same manner as in Reference Example 1, except that the amount of sulfolane was changed to 60 parts by mass and the amount of ethyl methyl sulfone was changed to 40 parts by mass.

### (Reference Example 7)

A solvent for an electrolytic solution of electrochemical devices was prepared in the same manner as in Reference Example 2, except that the amount of sulfolane was changed to 90 parts by mass and the amount of ethyl isopropyl sulfone was changed to 10 parts by mass.

### (Reference Example 8)

A solvent for an electrolytic solution of electrochemical devices was prepared in the same manner as in Reference Example 2, except that the amount of sulfolane was changed to 60 parts by mass and the amount of ethyl isopropyl sulfone was changed to 40 parts by mass.

### (Comparative Example 1)

A solvent for an electrolytic solution of electrochemical devices was prepared in the same manner as in Reference Example 1, except that monoethanolamine was not used.

### (Comparative Example 2)

A solvent for an electrolytic solution of electrochemical devices was prepared in the same manner as in Reference Example 2, except that monoethanolamine was not used.

### <Evaluation>

The solvents for an electrolytic solution of electrochemical devices obtained in the examples, reference examples and comparative examples were evaluated for the following parameters.

### (Heat stability test 1)

An amount of 250 mL of the solvent for an electrolytic solution of electrochemical devices obtained in each of the examples, reference examples and comparative examples was charged into a 500-mL flask, and nitrogen gas was fed thereinto at a flow rate of 83 mL/min. While the gas blown therethrough was introduced into a gas suction bottle containing 100 mL of 3% aqueous hydrogen peroxide as a sulfur dioxide absorbent, the solvent for an electrolytic solution of electrochemical devices was heated to 180 ± 2°C over about 20 minutes. While the temperature of the solvent for an electrolytic solution of electrochemical devices was maintained at 180 ± 2°C, nitrogen gas was fed thereinto at a flow rate of 83 mL/min for one hour. Then, while nitrogen gas was fed at a flow rate of 40 mL/min, the solvent for an electrolytic solution of electrochemical devices was cooled to 100°C. After the cooling, the suction bottle was removed, and the amount of sulfur dioxide in the absorbent was determined by ion chromatography. The determined amount was taken as the amount of generated sulfur dioxide. Table 1 shows the result.

### (Heat stability test 2)

A 500-mL flask was charged with 250 mL of the solvent for an electrolytic solution of electrochemical devices obtained in each of the examples, reference examples and comparative examples, and the flask was put into an oil bath at 180 ± 2°C. The amount of sulfur dioxide of the solvent for an electrolytic solution of electrochemical devices in the flask was determined by ion chromatography right after the placement of the flask in the oil bath (0 h), and two hours (2 h), four hours (4 h), and eight hours (8 h) after the placement of the flask in the oil bath. Each measured value was taken as the amount of generated sulfur dioxide. Table 1 shows the result.

### (Measurement of viscosity)

The viscosity of the solvent for an electrolytic solution of electrochemical devices obtained in each of the examples, reference examples and comparative examples was measured with a rotary viscometer ("DIGITAL VISCOMETER DVH-EII" produced by Toki Sangyo Co., Ltd.) at 100 rpm and at 20°C, 25°C, and 35°C. For calibration, a viscometer calibration standard liquid (Nippon Grease Co., Ltd.) was used. Table 1 shows the result.

**[Table 1]**

| | | | Example | | | | | | | | Comparative Example | |
|---|---|---|---|---|---|---|---|---|---|---|---|---|
| | | | 1* | 2* | 3 | 4 | 5* | 6* | 7* | 8* | 1 | 2 |
| Composition (parts by mass) | Cyclic sulfone compound | Sulfolane | 80 | 80 | 80 | 80 | 90 | 60 | 90 | 60 | 80 | 80 |
| | Chain alkyl sulfone compound | Ethyl methyl sulfone | 20 | - | 20 | - | 10 | 40 | - | - | 20 | - |
| | | Ethyl isopropyl sulfone | - | 20 | - | 20 | - | - | 10 | 40 | - | 20 |
| | Monoethanolamine | | 0.1 | 0.1 | - | - | 01 | 0.1 | 0.1 | 0.1 | - | - |
| | 4-tert-butyleatechol | | - | - | 01 | 01 | - | - | - | - | - | - |
| Evaluation | Heat stability test 1 (amount of generated sulfur dioxide (ppm)) | | 4.3 | Less than 1 | 26.2 | 35.4 | 7.8 | 5.2 | 123 | 6.4 | 204 | 80 |
| | Heat stability test 2 (amount of generated sulfur dioxide (ppm)) | 0 h | 8.4 | 0.9 | 4.2 | 4.3 | 3.6 | 3.2 | 18.2 | 3.9 | 16.5 | 18.4 |
| | | 2 h | 3.7 | 18.6 | 26.4 | 24.4 | 6.7 | 5.1 | 26.8 | 18.2 | 151. 6 | 1465 |
| | | 4 h | 5.6 | 12.7 | 18.6 | 29.7 | 4.8 | 4.9 | 32.4 | 16.4 | 156.1 | 184.5 |
| | | 8 h | 48 | 6.9 | 32.8 | 16.5 | 5.4 | 7.2 | 21.4 | 8.8 | 246.4 | 200.7 |
| | Viscosity (mPa·s) | 35°C | 7.0 | 6.8 | 7.1 | 6.7 | 7.4 | 6.6 | 7.4 | 5.7 | 6.9 | 6.8 |
| | | 25°C | 9.4 | 9.6 | 9.6 | 9.7 | 10.3 | 8.7 | 10.3 | 8.6 | 9.4 | 10.1 |
| | | 20°C | 11.7 | 11.8 | 11.5 | 11.9 | 12.6 | 10.6 | 12.4 | 10.1 | 11.9 | 11.1 |

| | | | | | | | | | | | | |
|---|---|---|---|---|---|---|---|---|---|---|---|---|
| * Reference Examples | | | | | | | | | | | | |

The result of "(Heat stability test 1)" shows that the solvents for an electrolytic solution of electrochemical devices obtained in the examples enable a reduction in the amount of generated sulfur dioxide compared to the case of the solvents for an electrolytic solution of electrochemical devices obtained in the comparative examples.

The result of "(Heat stability test 2)" shows that the amount of generated sulfur dioxide of each of the solvents for an electrolytic solution of electrochemical devices obtained in the examples was kept low, while the solvents for an electrolytic solution of electrochemical devices obtained in the comparative examples generated a large amount of sulfur dioxide.

The result of "(Measurement of viscosity)" shows that the solvents for an electrolytic solution of electrochemical devices obtained in the examples were each stably liquid with a low viscosity even at 20°C.

### (Conductivity test of electrolytic solution of electrochemical device)

An amount of 14.11 g of tetraethylammonium tetrafluoroborate was dissolved as an electrolyte in 100 g of each of the solvents for an electrolytic solution of electrochemical devices obtained in Reference Examples 1 and 2 to prepare electrolytic solutions used in electrochemical devices. The conductivity of the prepared electrolytic solution of electrochemical devices at 20°C to -30°C was measured with a resistance meter ("3532-50LCR HiTESTER" produced by Hioki E. E. Corporation). Table 2 shows the results.

**[Table 2]**

| Solvent for electrolytic solution of electrochemical device | | Electrolyte | | Conductivity (mS/cm) | | | | | |
|---|---|---|---|---|---|---|---|---|---|
| Kind | Amount (g) | Kind | Amount (g) | -30°C | -20°C | -10°C | -0°C | 10°C | 20°C |
| Example 1* | 100 | Tetraethylammonium tetrafluoroborate | 14.11 | 0.00758 | 0.00991 | 0.01636 | 0.02484 | 0.35623 | 0.48592 |
| Example 2* | 100 | Tetraethylammonium tetrafluoroborate | 14.11 | 0.00200 | 0.01009 | 0.01678 | 0.02570 | 0.36899 | 0.50429 |

| | | | | | | | | | |
|---|---|---|---|---|---|---|---|---|---|
| * Reference Examples | | | | | | | | | |

The result of "(Conductivity test of electrolytic solution of electrochemical device)" shows that the electrolytic solutions prepared from the solvents for an electrolytic solution of electrochemical devices in Reference Examples 1 and 2 each exhibit excellent conductivity over a wide temperature range from 20° to -30°C. The conductivity varies depending on the kind of the chain sulfone compound used. This indicates that use of an appropriate chain sulfone compound in accordance with the electrolyte to be used can impart higher electroconductivity.

### INDUSTRIAL APPLICABILITY

The present invention can provide a solvent for an electrolytic solution of electrochemical devices which is chemically stable at high temperatures over a long period of time and is stably liquid at low temperatures.

## Claims

1. A solvent for an electrolytic solution of electrochemical devices, comprising:
a cyclic sulfone compound represented by the formula (1) : 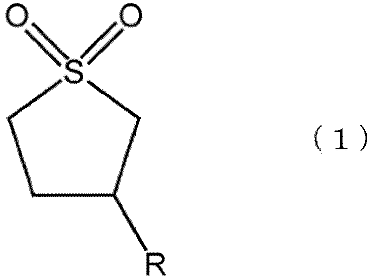 wherein R is a hydrogen atom or a linear or branched C1-C6 alkyl group;
a chain alkyl sulfone compound represented by the formula (2) : 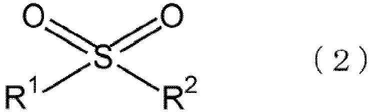 wherein R¹ and R² each independently represent a linear or branched C1-C5 alkyl group, and may be the same as or different from each other; and
4-tert-butylcatechol,
wherein the amount of the 4-tert-butylcatechol is 0.0001 to 0.4 parts by mass based on 100 parts by mass of the total amount of the cyclic sulfone compound and the chain alkyl sulfone compound.

2. The solvent for an electrolytic solution of electrochemical devices according to claim 1,
wherein the amount of the chain alkyl sulfone compound is 10 to 40 parts by mass based on 100 parts by mass of the total amount of the cyclic sulfone compound and the chain alkyl sulfone compound.

## Patentansprüche

1. Lösungsmittel für eine Elektrolytlösung von elektrochemischen Vorrichtungen, das Folgendes umfasst:
eine zyklische Sulfonverbindung, die durch Formel (1) dargestellt ist: 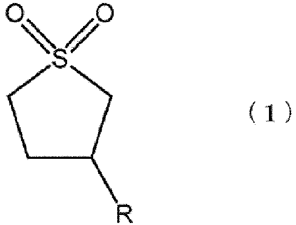 worin R ein Wasserstoffatom oder eine unverzweigte oder verzweigte C₁-C₆-Alkylgruppe ist;
eine kettenförmige Alkylsulfonverbindung, die durch Formel (2) dargestellt ist: 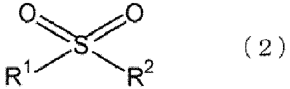 worin R¹ und R² jeweils unabhängig für eine unverzweigte oder verzweigte C₁-C₅-Alkylgruppe stehen und gleich oder unterschiedlich sein können; und
4-tert-Butylcatechol;
wobei die Menge an 4-tert-Butylcatechol 0,0001 bis 0,4 Masseteile, bezogen auf 100 Masseteile der Gesamtmenge aus zyklischer Sulfonverbindung und kettenförmiger Alkylsulfonverbindung beträgt.

2. Lösungsmittel für eine Elektrolytlösung von elektrochemischen Vorrichtungen nach Anspruch 1,
wobei die Menge der kettenförmigen Alkylsulfonverbindung 10 bis 40 Masseteile, bezogen auf 100 Masseteile der Gesamtmenge aus zyklischer Sulfonverbindung und kettenförmiger Alkylsulfonverbindung beträgt.

## Revendications

1. Solvant pour une solution électrolytique de dispositifs électrochimiques, comprenant :
un composé sulfone cyclique représenté par la formule (1) : 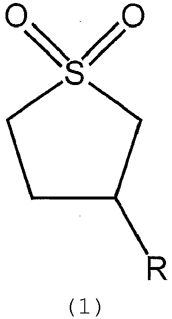 dans laquelle R est un atome d'hydrogène ou un groupe alkyle en C₁ à C₆ linéaire ou ramifié ;
un composé alkylsulfone linéaire représenté par la formule (2) : 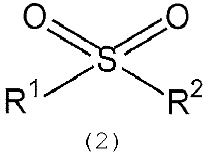 dans laquelle chacun de R¹ et R², qui peuvent être identiques ou différents, représente indépendamment un groupe alkyle en C₁ à C₅ linéaire ou ramifié ; et
du 4-tert-butylcatéchol,
dans lequel la quantité du 4-tert-butylcatéchol est de 0,0001 à 0,4 partie en masse pour 100 parties en masse de la quantité totale du composé sulfone cyclique et du composé alkylsulfone linéaire.

2. Solvant pour une solution électrolytique de dispositifs électrochimiques selon la revendication 1,
dans lequel la quantité du composé alkylsulfone linéaire est de 10 à 40 parties en masse pour 100 parties en masse de la quantité totale du composé sulfone cyclique et du composé alkylsulfone linéaire.
